(19) Europäisches Patentamt / European Patent Office / Office européen des brevets

(11) EP 4 635 991 A1

(12) **EUROPEAN PATENT APPLICATION**
published in accordance with Art. 153(4) EPC

(43) Date of publication:
**22.10.2025 Bulletin 2025/43**

(21) Application number: **23903888.8**

(22) Date of filing: **07.12.2023**

(51) International Patent Classification (IPC):
***C08F 210/16*** *(2006.01)* ***C08F 210/14*** *(2006.01)*
***C08F 4/659*** *(2006.01)* ***C08F 4/6592*** *(2006.01)*
***C08F 4/60*** *(2006.01)*

(52) Cooperative Patent Classification (CPC):
**C08F 4/60; C08F 4/659; C08F 4/6592; C08F 210/14; C08F 210/16**

(86) International application number:
**PCT/KR2023/020135**

(87) International publication number:
**WO 2024/128685 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.12.2022 KR 20220173250**

(71) Applicant: **Hanwha Solutions Corporation**
**Jung-gu**
**Seoul 04541 (KR)**

(72) Inventors:
- **PARK, Hye Ran**
  **Daejeon 34128 (KR)**
- **JOUNG, Ui Gab**
  **Daejeon 34128 (KR)**
- **SEO, Junho**
  **Daejeon 34128 (KR)**
- **LEE, Munhee**
  **Daejeon 34128 (KR)**
- **KIM, Sung Dong**
  **Daejeon 34128 (KR)**
- **PARK, Jeong Hyun**
  **Daejeon 34128 (KR)**
- **KIM, Ahreum**
  **Daejeon 34128 (KR)**
- **KIM, Jiho**
  **Daejeon 34128 (KR)**

(74) Representative: **Berggren Oy**
**P.O. Box 16**
**Fabianinkatu 21**
**00101 Helsinki (FI)**

# (54) OLEFIN-BASED POLYMER PREPARATION METHOD AND OLEFIN-BASED POLYMER, WHICH IS PREPARED THEREBY AND HAS EXCELLENT PROCESSABILITY

(57) The present invention relates to an olefin-based polymer preparation method and an olefin-based polymer, which is prepared thereby and has excellent processability. Since the olefin-based polymer prepared by the hybrid metallocene catalyst according to an example embodiment of the present invention has a large bimodal or multimodal molecular weight distribution, it has excellent processability and the olefin-based polymer film prepared by molding the polymer may show excellent quality with suppressed gel production.

[FIG. 1]

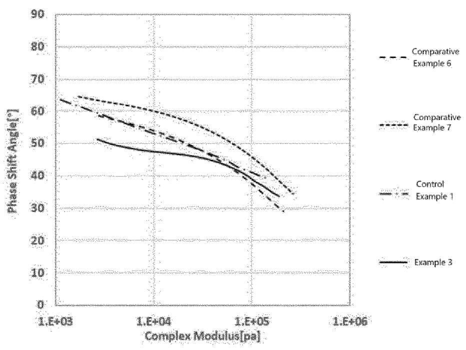


EP 4 635 991 A1

## Description

[Technical Field]

The present invention relates to a method for preparing an olefin-based polymer, and an olefin-based polymer which is prepared thereby and has excellent processability. Specifically, the present invention relates to a method for preparing an olefin-based polymer in the presence of a hybrid metallocene catalyst, and an olefin-based polymer which is prepared thereby and has a large bimodal or multimodal molecular weight distribution to have excellent processability and allow preparation of a film with suppressed gel production.

[Background Art]

Polyolefin-based polymers are used in various ways in real life as materials for shopping bags, greenhouses, fishing nets, cigarette wrappers, ramen bags, yogurt bottles, battery cases, car bumpers, interior materials, shoe soles, washing machines, and the like.

Conventionally, polyolefin-based polymers such as polyethylene, polypropylene, and ethylene $\alpha$-olefin copolymers and copolymer thereof are prepared by heterogeneous catalysts such as a Ziegler-Natta catalyst formed of a titanium compound and an alkyl aluminum compound.

Recently, a method for preparing a polyolefin using a metallocene catalyst which is a homogeneous catalyst having very high catalytic activity has been studied. A metallocene catalyst is a compound in which a ligand such as cyclopentadienyl, indenyl, or cycloheptadienyl is coordinated to a transition metal or a transition metal halogen compound, and has a sandwich structure as a basic form. Herein, it has various molecular structures depending on a ligand form and the type of center metal.

Since in a Ziegler-Natta catalyst which is a heterogeneous catalyst, a metal component as an active site is dispersed on an inert solid surface, the properties of the active site of the Ziegler-Natta catalyst are not uniform; however, since the metallocene catalyst is one compound having a certain structure, the metallocene catalyst is known as a single-site catalyst having identical polymerization properties in all active sites.

The metallocene catalyst as such allows easy copolymerization and may adjust a three-dimensional structure of a polymer depending on catalyst symmetry, and a polymer prepared therefrom has a narrow molecular weight distribution and a uniform comonomer distribution.

However, a polymer prepared by the metallocene catalyst has excellent mechanical strength, but low processability, due to the narrow molecular weight distribution. In order to solve the problem, there are various methods, such as changing a molecular structure of a polymer or broadening a molecular weight distribution. For example, U.S. Patent No. 5,272,236 discloses that processability of a polymer was improved using a catalyst which introduces a long chain branch (LCB) as a branch to a main chain of a polymer, but gel may be produced by entanglement of the long chain branch.

In general, it is known that as the molecular weight distribution (MWD) or the melt flow ratio (MFR) of the polyolefin is larger, processability is better, but the large MWD or MFR of the polyolefin does not necessarily mean excellent processability in a high speed area.

Therefore, an olefin-based polymer which has a large bimodal or multimodal molecular weight distribution, has excellent high-speed processability, and allows preparation of film with suppressed gel production is required.

[Disclosure]

[Technical Problem]

An object of the present invention is to provide a method for preparing an olefin-based polymer in the presence of a hybrid metallocene catalyst, and an olefin-based polymer which is prepared thereby and has a large bimodal or multimodal molecular weight distribution to have excellent processability and allow preparation of a film with suppressed gel production.

[Technical Solution]

In one general aspect, a method for preparing an olefin-based polymer comprises: polymerizing ethylene and at least one $\alpha$-olefin in the presence of a hybrid metallocene catalyst comprising: (a) at least one first transition metal compound selected from transition metal compounds represented by the following Chemical Formulae 1 to 4; (b) at least one second transition metal compound selected from a transition metal compound represented by the following Chemical Formula 5; and (c) a cocatalyst compound to obtain an olefin-based polymer, wherein the olefin-based polymer has a density of 0.930 to 0.970 g/cm$^3$, a melt index ($I_{2.16}$) of 0.1 to 2.0 g/10 min as measured at 190°C with a load of 2.16 kg, a

weight average molecular weight of 100,000 to 150,000 g/mol, and a shear rate defined by the following Equation 1 of 1,500 $sec^{-1}$ or more, at which a melt fracture or shark skin phenomenon occurs when measured with a capillary rheometer:

[Equation 1]

$$\dot{\gamma}_{ap} = \frac{4V}{\pi R^3}$$

[Chemical Formula 1] [Chemical Formula 2]

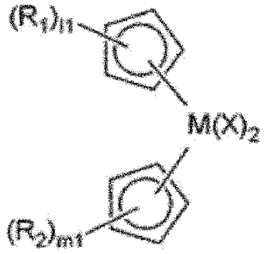

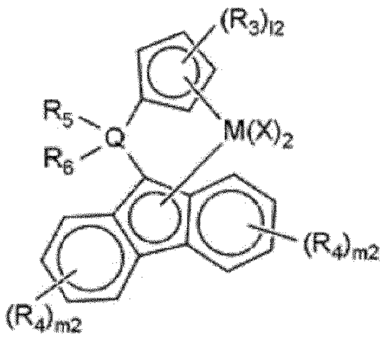

[Chemical Formula 3] [Chemical Formula 4]

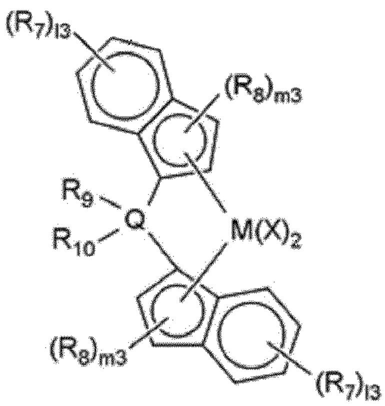

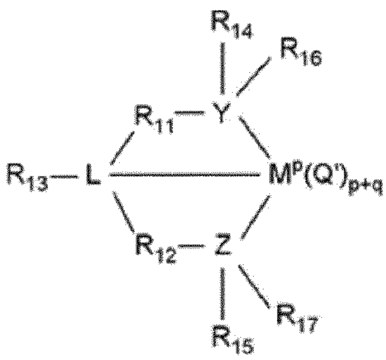

[Chemical Formula 5]

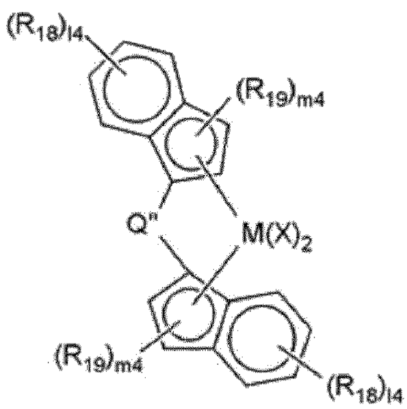

wherein $\dot{r}_{ap}$ is an apparent shear rate ($sec^{-1}$), V is a volume flow ($mm^3/sec$) produced by a piston, and R is a radius (mm) of a round hole capillary,
l1 and m1 are independently of each other an integer of 0 to 5,
l2, l3, l4, and m2 are independently of one another an integer of 0 to 4,
m3 and m4 are independently of each other an integer of 0 to 2,
p is an oxidation state of M, and is +3, +4, or +5,
q is a formal charge of a YZL ligand, and is 0, -1, - 2, or -3,
M is independently of each other titanium (Ti), zirconium (Zr), or hafnium (Hf),
X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,
Q is independently of each other carbon (C), silicon (Si), germanium (Ge), or tin (Sn),
Q' is an anionic leaving group and is independently of each other hydrogen, a substituted or unsubstituted $C_{1-40}$ hydrocarbon group, a substituted or unsubstituted $C_{1-40}$ heterohydrocarbon group, a hetero atom, or halogen,
Q" is a substituted or unsubstituted $C_{2-4}$ alkylene group,
L is a Group 15 or Group 16 element, and preferably nitrogen,
Y is a Group 15 element, preferably nitrogen or phosphorus, and more preferably nitrogen,
Z is a Group 15 element, preferably nitrogen or phosphorus, and more preferably nitrogen,
$R_1$ to $R_4$, $R_7$, $R_8$, $R_{18}$, and $R_{19}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring,
$R_5$, $R_6$, $R_9$, and $R_{10}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$ and $R_9$ and $R_{10}$ may or may not be independently of each other connected to each other to form a substituted or unsubstituted, saturated or unsaturated $C_{2-20}$ ring,
$R_{11}$ and $R_{12}$ are independently of each other a $C_{1-20}$ hydrocarbon group or a heteroatom-containing group, in which the heteroatom is silicon, germanium, tin, lead, or phosphorus, or $R_{11}$ and $R_{12}$ may be connected to each other,
$R_{13}$ does not exist, or is hydrogen, $C_{1-20}$ alkyl, a halogen, or a heteroatom-containing group,
$R_{14}$ and $R_{15}$ are independently of each other an alkyl group, an aryl group, a substituted aryl group, a cyclic alkyl group, a substituted cyclic alkyl group, or a polycyclic system, and
$R_{16}$ and $R_{17}$ independently of each other, do not exist or may be hydrogen, an alkyl group, a halogen, heteroatom, a hydrocarbon group, or a heteroatom-containing group.

In a specific example of the present invention, a mole ratio between the first transition metal compound and the second transition metal compound may be in a range of 10:1 to 1:10.

In a specific example of the present invention, the transition metal compound of Chemical Formula 1 may be at least one of the transition metal compounds represented by the following Chemical Formulae 1-1 to 1-4, the transition metal compound of Chemical Formula 2 may be at least one of the transition metal compounds represented by the following Chemical Formulae 2-1 to 2-3, the transition metal compound of Chemical Formula 3 may be a transition metal compound represented by the following Chemical Formula 3-1, and the transition metal compound of Chemical Formula 4 may be a transition metal compound represented by the following Chemical Formula 4-1:

[Chemical Formula 1-1] [Chemical Formula 1-2]

[Chemical Formula 1-3]

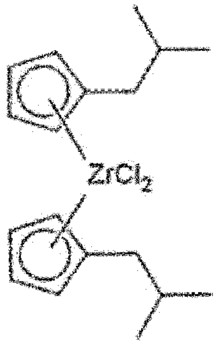 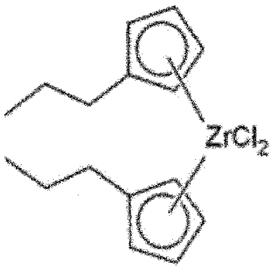 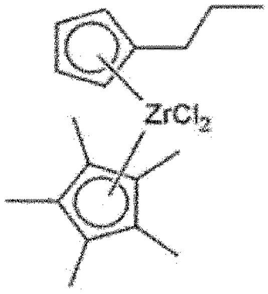

[Chemical Formula 1-4] [Chemical Formula 2-1]

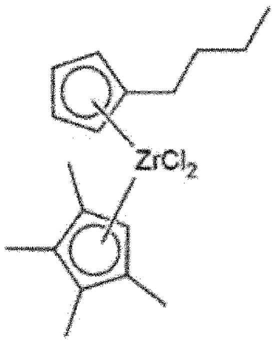 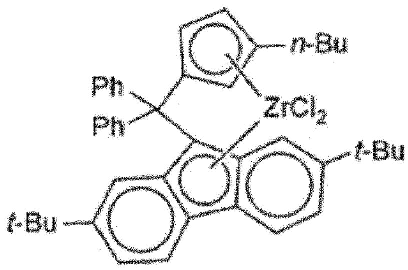

[Chemical Formula 2-2] [Chemical Formula 2-3]

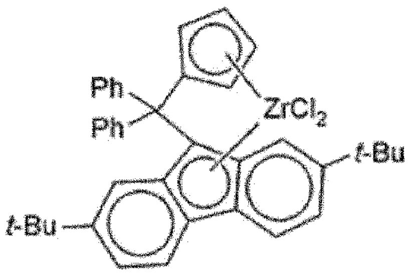 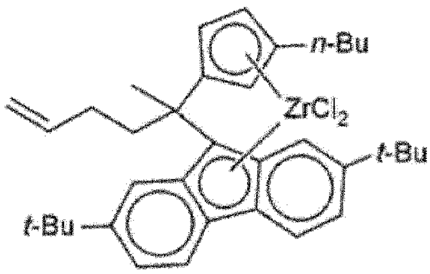

[Chemical Formula 3-1] [Chemical Formula 4-1]

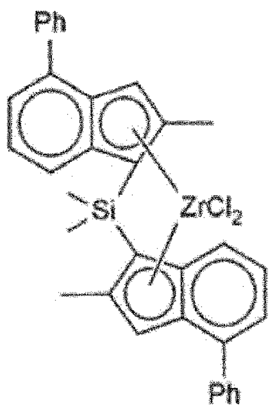 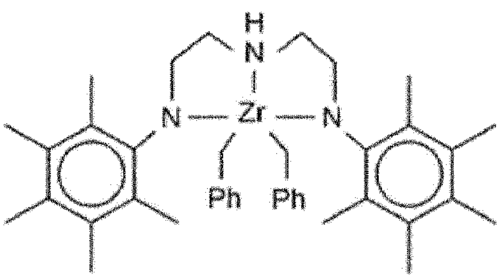

wherein n-Bu is n-butyl, t-Bu is t-butyl, and Ph is phenyl.

In a specific example of the present invention, the transition metal compound of Chemical Formula 5 may be a transition metal compound represented by the following Chemical Formula 5-1:

[Chemical Formula 5-1]

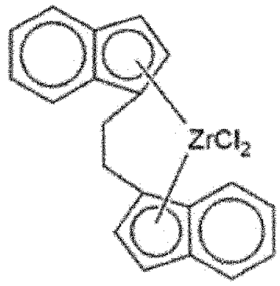

In a specific example of the present invention, the cocatalyst compound may comprise at least one selected from the group consisting of a compound represented by the following Chemical Formula 6, a compound represented by the following Chemical Formula 7, and a compound represented by the following Chemical Formula 8:

[Chemical Formula 6]

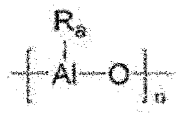

[Chemical Formula 7]

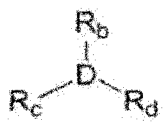

[Chemical Formula 8] $[L-H]^+[Z(A)_4]^-$ or $[L]^+[Z(A)_4]^-$

wherein n is an integer of 2 or more, and $R_a$ is a halogen atom, a hydrocarbon group having 1 to 20 carbon atoms, or a hydrocarbon group having 1 to 20 carbon atoms substituted by halogen,

D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by halogen, or an alkoxy group having 1 to 20 carbon atoms, and

L is a neutral or cationic Lewis base, $[L-H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms.

In a preferred specific example of the present invention, the compound represented by Chemical Formula 6 may be at least one selected from the group consisting of methylaluminoxane, ethylaluminoxane, isobutylaluminoxane, and butylaluminoxane.

In a preferred specific example of the present invention, the compound represented by Chemical Formula 7 may be at least one selected from the group consisting of trimethylaluminum, triethylaluminum, triisobutylaluminum, tripropylaluminum, tributylaluminum, dimethylchloroaluminum, triisopropylaluminum, tri-*s*-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-*p*-tolylaluminum, dimethylaluminummethoxide, dimethylaluminumethoxide, trimethylboron, triethylboron, triisobutylboron, tripropylboron, and tributylboron.

In a preferred specific example of the present invention, the compound represented by Chemical Formula 8 may be at least one selected from the group consisting of triethylammonium tetraphenylborate, tributylammonium tetraphenylborate, trimethylammonium tetraphenylborate, tripropylammonium tetraphenylborate, trimethylammonium tetra(*p*-tolyl)borate, trimethylammonium tetra(*o,p*-dimethylphenyl) borate, tributylammonium tetra(*p*-trifluoromethylphenyl)borate, trimethylammonium tetra(*p*-trifluoromethylphenyl)borate, tributylammonium tetrapentafluorophenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, triethylammonium tetraphenylaluminum, tributylammonium tetraphenylaluminate, trimethylammonium tetraphenylaluminate, tripropylammonium tetraphenylaluminate, trimethylammonium tetra(*p*-tolyl) aluminate, tripropylammonium tetra(*p*-tolyl)aluminate, triethylammonium tetra(*o,p*-dimethylphenyl)aluminate, tributylammonium tetra(*p*-trifluoromethylphenyl)aluminate, trimethylammonium tetra(*p*-trifluoromethylphenyl)aluminate, tributylammonium tetrapentafluorophenylaluminate, N,N-diethylanilinium tetraphenylaluminate, N,N-diethylanilinium tetrapentafluorophenylaluminate, diethylammonium tetrapentatetraphenylaluminate, triphenylphosphonium tetraphenylaluminate, trimethylphosphonium tetraphenylaluminate, tripropylammonium tetra(*p*-tolyl)borate, triethylammonium tetra(*o,p*-dimethylphenyl) borate, triphenylcarbonium tetra(*p*-trifluoromethylphenyl)borate, and triphenylcarbonium tetrapentafluorophenylborate.

In a specific example, the hybrid metallocene catalyst may further comprise a carrier which supports the hybrid transition metal compound, the cocatalyst compound, or both.

In a specific example of the present invention, the carrier may comprise at least one selected from the group consisting of silica, alumina, and magnesia.

Herein, a total amount of the hybrid transition metal compound supported on the carrier may be 0.001 to 1 mmol based on 1 g of the carrier, and a total amount of the cocatalyst compound supported on the carrier may be 2 to 15 mmol based on 1 g of the carrier.

In a specific example of the present invention, the $\alpha$-olefin may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene. Preferably, the $\alpha$-olefin may be 1-hexene.

In a specific example of the present invention, polymerization of ethylene and at least one $\alpha$-olefin may be performed by gas phase polymerization, and specifically, the polymerization of ethylene and at least one $\alpha$-olefin may be performed in a gas phase fluidized bed reactor.

In another general aspect, an olefin-based polymer prepared by the above preparation method is provided, wherein the olefin-based polymer has a density of 0.930 to 0.970 g/cm$^3$, a melt index ($I_{2.16}$) of 0.1 to 2.0 g/10 min as measured at 190°C with a load of 2.16 kg, a weight average molecular weight of 100,000 to 150,000 g/mol, and a shear rate defined by the following Equation 1 of 1,500 sec$^{-1}$ or more, at which a melt fracture or shark skin phenomenon occurs when measured with a capillary rheometer.

In a specific example of the present invention, the olefin-based polymer may have a ratio (melt flow ratio; MFR) between a melt index ($I_{21.6}$) measured with a load of 21.6 kg and a melt index ($I_{2.16}$) measured with a load of 2.16 kg at 190°C of 30 to 200.

In a specific example of the present invention, when the olefin-based polymer is represented as a Van Gurp-Palmen graph, there may be an inflection point.

In a specific example of the present invention, when the olefin-based polymer is molded into a film having a thickness of 30 to 60 $\mu$m by blown film molding, the film may have a gel index of 1 or less, the gel index being defined by the number of gels having a size of 0.05 mm or more present in a random film area of 5 cm$\times$5 cm.

In still another general aspect, an olefin-based polymer film prepared by molding the olefin-based polymer is provided, wherein when the olefin-based polymer is molded into a film having a thickness of 30 to 60 $\mu$m by blown film molding, the film has a gel index of 1 or less, the gel index being defined by the number of gels having a size of 0.05 mm or more present in a random film area of 5 cm$\times$5 cm.

[Advantageous Effects]

Since the olefin-based polymer prepared by the hybrid metallocene catalyst according to an example embodiment of the present invention has a large bimodal or multimodal molecular weight distribution, it has excellent high-speed processability, and the olefin-based polymer film prepared by molding the polymer may show excellent quality with suppressed gel production.

[Description of Drawings]

FIG. 1 is a Van Gurp-Palmen graph of the olefin-based polymers of Example 3, Comparative Examples 6 and 7, and

Control Example 1.

FIG. 2 is a graph showing GPC analysis results of the olefin-based polymers of Example 3, Comparative Examples 6 and 7, and Control Example 1.

[Best Mode]

Hereinafter, the present invention will be described in more detail.

**Method for preparing olefin-based polymer**

According to an example embodiment of the present invention, a method for preparing an olefin-based polymer comprising: polymerizing ethylene and at least one α-olefin in the presence of a hybrid metallocene catalyst comprising: (a) at least one first transition metal compound selected from transition metal compounds represented by the following Chemical Formulae 1 to 4; (b) at least one second transition metal compound selected from a transition metal compound represented by the following Chemical Formula 5; and (c) a cocatalyst compound to obtain an olefin-based polymer is provided:

[Chemical Formula 1] [Chemical Formula 2]

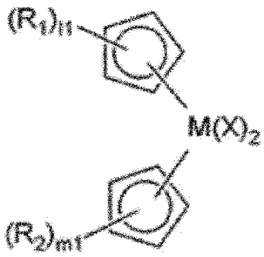

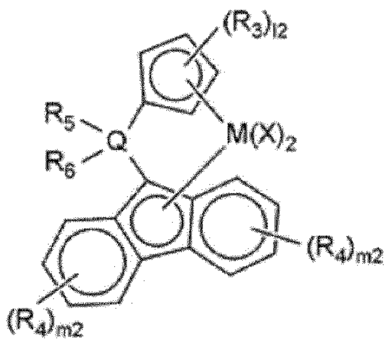

[Chemical Formula 3] [Chemical Formula 4]

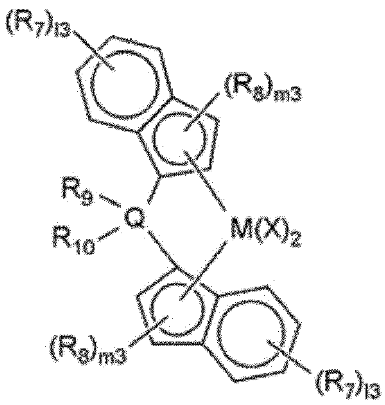

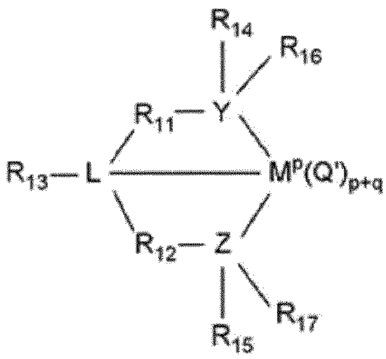

[Chemical Formula 5]

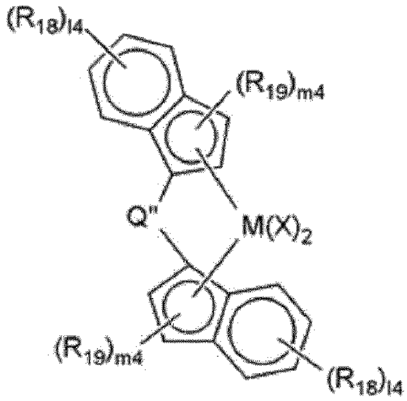

In the above chemical formulae, l1 and m1 are independently of each other an integer of 0 to 5. Preferably, l1 is 1, and m1 is independently of each other an integer of 1 to 5.

l2, l3, l4, and m2 are independently of one another an integer of 0 to 4. Preferably, l2, l3, l4, and m2 are independently of one another 0 or 1.

m3 and m4 are independently of each other an integer of 0 to 2. Preferably, m3 and m4 are independently of each other 0 or 1.

P is an oxidation state of M, and is +3, +4, or +5.

q is a formal charge of a YZL ligand, and is 0, -1, - 2, or -3.

M is a Group 4 transition metal of a periodic table of elements. Specifically, M may be titanium (Ti), zirconium (Zr), or hafnium (Hf), and more specifically, zirconium.

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido. Specifically, X may be independently of each other halogen, and more specifically, chlorine (Cl).

Q is independently of each other carbon (C), silicon (Si), germanium (Ge), or tin (Sn). Specifically, Q is independently of each other carbon (C) or silicon (Si).

Q' is an anionic leaving group and is independently of each other hydrogen, a substituted or unsubstituted $C_{1-40}$ hydrocarbon group, a substituted or unsubstituted $C_{1-40}$ heterohydrocarbon group, a hetero atom, or a halogen. Specifically, Q' may be a straight chain or branched chain alkyl group, an alkenyl group, an alkynyl group, a cycloalkyl group, an aryl group, an acyl group, an aroyl group, an alkoxy group, an aryloxy group, an alkylthio group, a dialkylamino group, an alkoxycarbonyl group, an aryloxycarbonyl group, a carbamoyl group, an alkyl- or dialkyl-carbamoyl group, an acyloxy group, an acylamino group, an aroylamino group, a straight chain, branched chain, or cyclic alkylene group, or a combination thereof.

Q" is a substituted or unsubstituted $C_{2-4}$ alkylene group. Preferably, Q" may be an ethylene group ($-CH_2-CH_2-$).

L is a Group 15 or Group 16 element, and preferably nitrogen.

Y is a Group 15 element, preferably nitrogen or phosphorus, and more preferably nitrogen.

Z is a Group 15 element, preferably nitrogen or phosphorus, and more preferably nitrogen.

$R_1$ to $R_4$, $R_7$, $R_8$, $R_{18}$, and $R_{19}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring. Specifically, $R_1$ to $R_4$, $R_7$, $R_8$, $R_{18}$, and $R_{19}$ may be independently of one another substituted or unsubstituted $C_{1-20}$ alkyl or substituted or unsubstituted $C_{6-20}$ aryl.

$R_5$, $R_6$, $R_9$, and $R_{10}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$ and $R_9$ and $R_{10}$ may or may not be independently of each other connected to each other to form a substituted or unsubstituted, saturated or unsaturated $C_{2-20}$ ring. Specifically, $R_5$ and $R_6$, and $R_9$ and $R_{10}$ are independently of each other substituted or unsubstituted $C_{1-20}$ alkyl, substituted or unsubstituted $C_{2-20}$ alkenyl, or substituted or unsubstituted $C_{6-20}$ aryl.

$R_{11}$ and $R_{12}$ are independently of each other a $C_{1-20}$ hydrocarbon group or a heteroatom-containing group, in which the heteroatom is silicon, germanium, tin, lead, or phosphorus, or $R_{11}$ and $R_{12}$ may be connected to each other. Specifically, $R_{11}$ and $R_{12}$ may be independently of each other a $C_{1-6}$ hydrocarbon group.

$R_{13}$ does not exist, or is hydrogen, $C_{1-20}$ alkyl, a halogen, or a heteroatom-containing group. Specifically, $R_{13}$ may be hydrogen or methyl.

$R_{14}$ and $R_{15}$ are independently of each other an alkyl group, an aryl group, a substituted aryl group, a cyclic alkyl group, a substituted cyclic alkyl group, or a polycyclic system. Specifically, $R_{14}$ and $R_{15}$ may be independently of each other a substituted aryl group.

$R_{16}$ and $R_{17}$ independently of each other, do not exist or may be hydrogen, an alkyl group, a halogen, heteroatom, a hydrocarbyl group, or a heteroatom-containing group.

In the hybrid metallocene catalyst for olefin polymerization according to an example embodiment, a mole ratio between the first transition metal compound and the second transition metal compound may be in a range of 10:1 to 1:10. When the mole ratio between the first transition metal compound and the second transition metal compound is within the range, a polyolefin-based polymer having excellent high-speed processability may be obtained, and gel production of a film prepared therefrom may be suppressed.

In a specific example of the present invention, the transition metal compound of Chemical Formula 1 may be at least one of the transition metal compounds represented by the following Chemical Formulae 1-1 to 1-4, the transition metal compound of Chemical Formula 2 may be at least one of the transition metal compounds represented by the following Chemical Formulae 2-1 to 2-3, the transition metal compound of Chemical Formula 3 may be a transition metal compound represented by the following Chemical Formula 3-1, and the transition metal compound of Chemical Formula 4 may be a transition metal compound represented by the following Chemical Formula 4-1:

[Chemical Formula 1-1] [Chemical Formula 1-2]

[Chemical Formula 1-3]

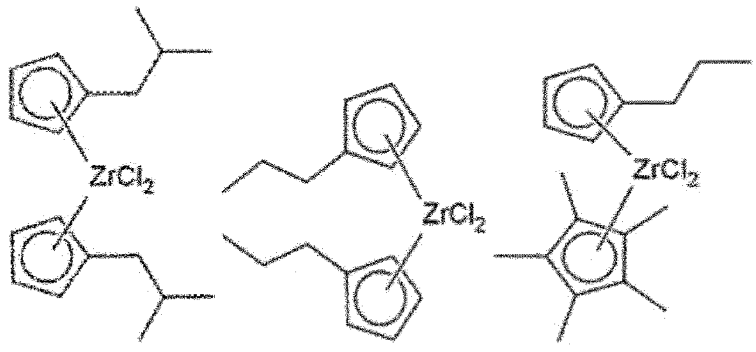

[Chemical Formula 1-4] [Chemical Formula 2-1]

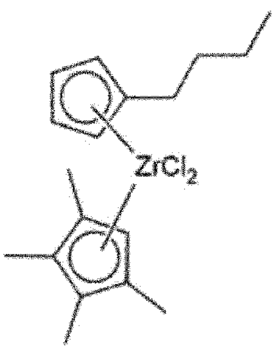

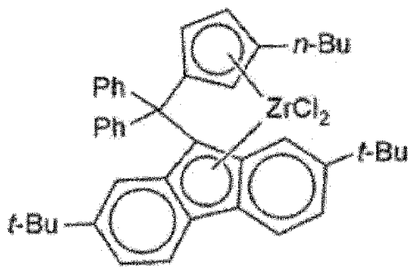

[Chemical Formula 2-2] [Chemical Formula 2-3]

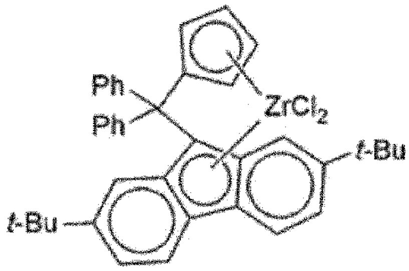

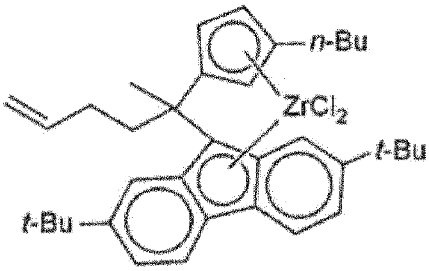

[Chemical Formula 3-1] [Chemical Formula 4-1]

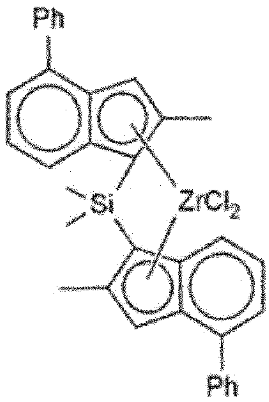

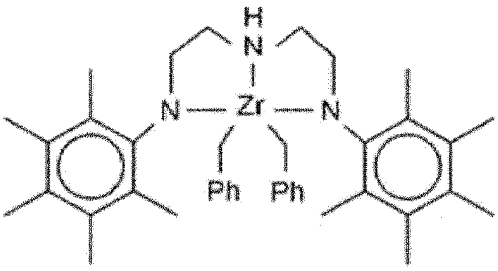

wherein *n*-Bu is *n*-butyl, *t*-Bu is *t*-butyl, and Ph is phenyl.

In a specific example of the present invention, the transition metal compound of Chemical Formula 5 may be a transition metal compound represented by the following Chemical Formula 5-1:

[Chemical Formula 5-1]

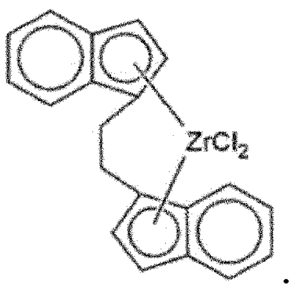

In a specific example of the present invention, the cocatalyst compound may comprise at least one selected from the group consisting of a compound represented by the following Chemical Formula 6, a compound represented by the following Chemical Formula 7, and a compound represented by the following Chemical Formula 8:

[Chemical Formula 6]

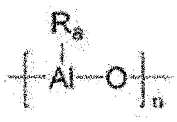

In the above Chemical Formula 6, n is an integer of 2 or more, and $R_a$ is a halogen atom, a hydrocarbon having 1 to 20 carbon atoms, or a hydrocarbon having 1 to 20 carbon atoms substituted by halogen. Specifically, $R_a$ may be methyl, ethyl, n-butyl, or isobutyl.

[Chemical Formula 7]

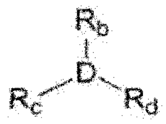

In the above Chemical Formula 7, D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by a halogen, or an alkoxy group having 1 to 20 carbon atoms. Specifically, when D is aluminum (Al), $R_b$, $R_c$, and $R_d$ may be independently of one another methyl or isobutyl, and when D is boron (B), $R_b$, $R_c$, and $R_d$ may be pentafluorophenyl, respectively.

[Chemical Formula 8] $[L\text{-}H]^+[Z(A)_4]^-$ or $[L]^+[Z(A)_4]^-$

In the above Chemical Formula 8, L is a neutral or cationic Lewis base, $[L\text{-}H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms. Specifically, $[L\text{-}H]^+$ may be a dimethylanilinium cation, $[Z(A)_4]^-$ may be $[B\ (C_6F_5)_4]^-$, and $[L]^+$ may be $[(C_6H_5)_3C]^+$.

An example of the compound represented by Chemical Formula 6 may comprise methylaluminoxane, ethylaluminoxane, isobutylaluminoxane, butylaluminoxane, and the like, and is preferably methylaluminoxane, but is not limited thereto.

An example of the compound represented by Chemical Formula 7 comprises trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and is preferably trimethylaluminum, triethylaluminum, and triisobutylaluminum, but is not limited thereto.

An example of the compound represented by Chemical Formula 8 may comprise triethylammonium tetraphenylborate, tributylammonium tetraphenylborate, trimethylammonium tetraphenylborate, tripropylammonium tetraphenylborate, trimethylammonium tetra(*p*-tolyl)borate, trimethylammonium tetra (*o,p*-dimethylphenyl)borate, tributylammonium tetra(*p*-trifluoromethylphenyl)borate, trimethylammonium tetra(*p*-trifluoromethylphenyl)borate, tributylammonium tetrapentafluorophenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, triethylammonium tetraphenylaluminate, tributylammonium tetraphenylaluminate, trimethylammonium tetraphenylaluminate, tripropylammonium tetraphenylaluminate, trimethylammonium tetra(*p*-tolyl) aluminate, tripropylammonium tetra(*p*-tolyl)aluminate, triethylammonium tetra(*o,p*-dimethylphenyl)aluminate, tributylammonium tetra(*p*-trifluoromethylphenyl)aluminate, trimethylammonium tetra(*p*-trifluoromethylphenyl)aluminate, tributylammonium tetrapentafluorophenylaluminate, N,N-diethylanilinium tetraphenylaluminate, N,N-diethylanilinium tetrapentafluorophenylaluminate, diethylammonium tetrapentatetraphenylaluminate, triphenylphosphonium tetraphenylaluminate, trimethylphosphonium tetraphenylaluminate, tripropylammonium tetra(*p*-tolyl)borate, triethylammonium tetra(o,p-dimethylphenyl) borate, triphenylcarbonium tetra(p-trifluoromethylphenyl)borate, triphenylcarbonium tetrapentafluorophenylborate, and the like.

In a specific example, the hybrid metallocene catalyst for olefin polymerization may further comprise a carrier which supports the hybrid transition metal compound, the cocatalyst compound, or both.

Herein, the carrier may comprise a material containing a hydroxyl group on the surface, and preferably, may use a material having highly reactive hydroxyl and siloxane groups, which has been dried to remove moisture from the surface. For example, the carrier may comprise at least one selected from the group consisting of silica, alumina, and magnesia. Specifically, silica, silica-alumina, silica-magnesia, and the like which are dried at a high temperature may be used as the carrier, and these may usually contain oxide, carbonate, sulfate, and nitrate components such as $Na_2O$, $K_2CO_3$, $BaSO_4$, and $Mg(NO_3)_2$. In addition, these may comprise carbon, zeolite, magnesium chloride, and the like. However, the carrier is not particularly limited thereto.

The carrier may have an average particle size of 10 to 250 μm, preferably 10 to 150 μm, and more preferably 20 to 100 μm.

The carrier may have a micropore volume of 0.1 to 10 ml/g, preferably 0.5 to 5 ml/g, and more preferably 1.0 to 3.0 ml/g.

The carrier may have a specific surface area of 1 to 1,000 $m^2/g$, preferably 100 to 800 $m^2/g$, and more preferably 200 to 600 $m^2/g$.

In a preferred example, when the carrier is silica, a drying temperature of silica may be 200 to 900°C. The drying temperature may be 300 to 800°C, and more preferably 400 to 700°C. When the drying temperature is lower than 200°C, silica has too much moisture so that the moisture on the surface reacts with a first cocatalyst compound, and when the drying temperature is higher than 900°C, the structure of the carrier may collapse.

A concentration of a hydroxyl group in dried silica may be 0.1 to 5 mmol/g, preferably 0.7 to 4 mmol/g, and more preferably 1.0 to 2 mmol/g. When the concentration of the hydroxyl group is less than 0.1 mmol/g, the supported amount of the cocatalyst is lowered, and when the concentration is more than 5 mmol/g, the catalyst component becomes inactive.

The total amount of the hybrid transition metal compound supported on the carrier may be 0.001 to 1 mmol based on 1 g of the carrier. When a ratio between the hybrid transition metal compound and the carrier satisfies the above range, appropriate supported catalyst activity is shown, which is advantageous in terms of the activity maintenance and economic feasibility of a catalyst.

The total amount of the cocatalyst compound supported on the carrier may be 2 to 15 mmol based on 1 g of the carrier. When the ratio of the cocatalyst compound and the carrier satisfies the above range, it is advantageous in terms of the activity maintenance and economic feasibility of a catalyst.

One or two or more carriers may be used. For example, both the hybrid transition metal compound and the cocatalyst compound may be supported on one carrier, and each of the hybrid transition metal compound and the cocatalyst compound may be supported on two or more carriers. In addition, only one of the hybrid transition metal compound and the cocatalyst compound may be supported on the carrier.

In a specific example of the present invention, the olefin-based polymer may be a homopolymer of an olefin-based monomer or a copolymer of an olefin-based monomer and a comonomer. Preferably, the olefin-based polymer is a copolymer of an olefin-based monomer and an olefin-based comonomer.

Herein, the olefin-based monomer may be at least one selected from the group consisting of $C_{2-20}$ α-olefin, $C_{3-20}$ diolefin, $C_{3-20}$ cycloolefin, and $C_{4-20}$ cyclodiolefin.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, or the like and the olefin-based polymer may be a homopolymer comprising only one of the olefin-based monomers exemplified above or a copolymer comprising two or more thereof.

In an example embodiment, the olefin-based polymer may be a copolymer of ethylene and $C_{3-20}$ α-olefin. Preferably, the olefin-based polymer may be a linear low-density polyethylene in which the olefin-based monomer is ethylene and the olefin-based comonomer is 1-hexene.

In this case, the content of ethylene is preferably 55 to 99.9 wt%, and more preferably 90 to 99.9 wt%. The content of the α-olefin-based comonomer is preferably 0.1 to 45 wt%, and more preferably 0.1 to 10 wt%.

In a specific example of the present invention, the olefin-based polymer may be prepared by a gas phase polymerization method, a solution polymerization method, a slurry polymerization method, or the like. Preferably, the polymerization of the olefin-based monomer may be performed by gas phase polymerization, and further specifically, the polymerization of the olefin-based monomer may be performed in a gas phase fluidized bed reactor.

When the olefin-based polymer is prepared by a solution polymerization method or a slurry polymerization method, an example of the solvent to be used may comprise a $C_{5-12}$ aliphatic hydrocarbon solvent such as pentane, hexane, heptane, nonane, decane, and isomers thereof; an aromatic hydrocarbon solvent such as toluene and benzene; a hydrocarbon solvent substituted by a chlorine atom such as dichloromethane and chlorobenzene; and a mixture thereof, but is not limited thereto.

The olefin-based polymer prepared by the method for preparing an olefin-based polymer according to an example embodiment of the present invention has a density of 0.930 to 0.970 $g/cm^3$, a melt index ($I_{2.16}$) of 0.1 to 2.0 g/10 min as measured at 190°C with a load of 2.16 kg, a weight average molecular weight of 100,000 to 150,000 g/mol, and a shear rate defined by the following Equation 1 of 1,500 $sec^{-1}$ or more, at which a melt fracture or shark skin phenomenon occurs when measured with a capillary rheometer:

[Equation 1]

$$\dot{\gamma}_{ap} = \frac{4V}{\pi R^3}$$

wherein $\dot{\gamma}_{ap}$ is an apparent shear rate ($sec^{-1}$), V is a volume flow ($mm^3/sec$) produced by a piston, and R is a radius (mm) of a round hole capillary.

## Olefin-based polymer

According to an example embodiment of the present invention, an olefin-based polymer, which is prepared by the method for preparing an olefin-based polymer described above, and has a density of 0.930 to 0.970 g/cm$^3$, a melt index ($I_{2.16}$) of 0.1 to 2.0 g/10 min as measured at 190°C with a load of 2.16 kg, a weight average molecular weight of 100,000 to 150,000 g/mol, and a shear rate defined by the following Equation 1 of 1,500 $sec^{-1}$ or more, at which a melt fracture or shark skin phenomenon occurs when measured with a capillary rheometer, is provided.

The olefin-based polymer according to an example embodiment of the present invention has a density of 0.930 to 0.970 g/cm$^3$. Preferably, the density of the olefin-based polymer may be 0.930 to 0.965 g/cm$^3$, and more preferably 0.935 to 0.960 g/cm$^3$.

The olefin-based polymer according to an example embodiment of the present invention has a melt index ($I_{2.16}$) as measured with a load of 2.16 kg at 190°C of 0.1 to 1.5 g/10 min. Preferably, the melt index of the olefin-based polymer measured with a load of 2.16 kg at 190°C may be 0.1 to 2.0 g/10 min, and more preferably 0.2 to 1.5 g/10 min.

The olefin-based polymer according to an example embodiment of the present invention has a weight average molecular weight of 100,000 to 150,000 g/mol. Preferably, the weight average molecular weight of the olefin-based polymer may be 100,000 to 145,000 g/mol, and more preferably, 100,000 to 140,000 g/mol.

In a specific example of the present invention, the olefin-based polymer may have a ratio (melt flow ratio; MFR) between a melt index ($I_{21.6}$) measured with a load of 21.6 kg and a melt index ($I_{2.16}$) measured with a load of 2.16 kg at 190°C of 30 to 200. Preferably, the MFR of the olefin-based polymer may be 30 to 150, and more preferably 40 to 135.

The olefin-based polymer according to an example embodiment of the present invention has a shear rate defined by the following Equation 1 at which a melt fracture or shark skin phenomenon is shown when measured with a capillary rheometer of 1,500 $sec^{-1}$ or more. Preferably, the shear rate at which a melt fracture or shark skin phenomenon is shown may be 1,750 $sec^{-1}$ or more, and more preferably 2,000 $sec^{-1}$ or more.

[Equation 1]

$$\dot{\gamma}_{ap} = \frac{4V}{\pi R^3}$$

wherein $\dot{\gamma}_{ap}$ is an apparent shear rate ($sec^{-1}$), V is a volume flow ($mm^3/sec$) produced by a piston, and R is a radius (mm) of a round hole capillary.

Melt fracture or shark skin commonly refers to occurrence of irregular bumps or shark scales or loss of surface gloss on the surface of the polymer during extrusion of the polymer. As the shear rate at which the melt fracture or shark skin occurs is higher, the processability of the corresponding polymer may be said to be excellent.

The olefin-based polymer according to an example embodiment of the present invention may have a bimodal or multimodal molecular weight distribution when measured by gel permeation chromatography (GPC).

Specifically, in the GPC graph of the olefin-based polymer according to an example embodiment of the present invention, when a point where the slope of the tangent line changes from a positive value to a negative value is a "peak", and a point where the slope of the tangent line changes from a negative value to a positive value is a "valley", the olefin-based polymer according to an example embodiment of the present invention may show a bimodal or multimodal molecular weight distribution having two or more peaks.

In a specific example of the present invention, when the olefin-based polymer is represented as a Van Gurp-Palmen graph, there may be an inflection point.

Whether there is a long chain branch in the ethylene-based polymer may be determined by whether there is an inflection point in the van Gurp-Palmen graph measured using a rheometer, whether it has a tendency to diverge as a complex modulus (G*) is smaller, or the like. In the van Gurp-Palmen graph, as the complex modulus value in the x-axis is smaller, a phase angle in the y-axis diverges, and as the complex modulus value is increased, there is an inflection point. The characteristics of the graph shows that many long chain branches are comprised in the ethylene-based polymer.

As described later, production of gel is suppressed in the olefin-based polymer film prepared from the olefin-based polymer according to an example embodiment of the present invention. Therefore, it is confirmed that the presence of the inflection point on the Van Gurp-Palmen graph of the olefin-based polymer according to an example embodiment of the present invention is due to the presence of the long chain branch, and thus, it is understood that the olefin-based polymer according to an example embodiment of the present invention shows excellent high-speed processability.

In a specific example of the present invention, when the above olefin-based polymer is molded into a film having a thickness of 30 to 60 $\mu$m by blown film molding, a gel index defined by the number of gels having a size of 0.05 mm or more present in a random film area of 5 cm$\times$5 cm may be 1 or less.

## Olefin-based polymer film

According to an example embodiment of the present invention, an olefin-based polymer film which is produced by molding the olefin-based polymer described above is provided. When the olefin-based polymer film according to an example embodiment of the present invention is molded into a film having a thickness of 30 to 60 $\mu$m by blown film molding, the film has a gel index defined by the number of gels having a size of 0.05 mm or more present in a random film area of 5 cm$\times$5 cm is 1 or less.

A method for preparing an olefin-based polymer film according to an example embodiment is not particularly limited, and a method known in the art to which the present invention pertains may be used. For example, the olefin-based polymer described above may be processed by a common method such as blown film molding, extrusion molding, or casting molding to prepare an olefin-based polymer film. Among them, blown film molding is most preferred.

## Examples

Hereinafter, the present invention will be described in more detail through the examples and the comparative examples. However, the following examples are only illustrative of the present invention, and do not limit the scope of the present invention.

<u>Preparation Example 1</u>

26 mg of the transition metal compound of Chemical Formula 2-1, 58 mg of the transition metal compound of Chemical Formula 2-1, and 22 mg of the transition metal compound of Chemical Formula 5-1 were mixed with 16 g of a toluene solution of 10 wt% of methylaluminoxane (MAO) (Al/Zr = 150) in a glove box and stirred at room temperature for 1 hour. Meanwhile, 4 g of silica (XP2402) was added to a reactor, and 30 ml of purified toluene was added and mixed. A solution of the transition metal compound was injected into the obtained silica slurry and stirring was performed for 3 hours in an oil bath at 75°C. After completion of supporting and sufficient complete separation of solid/liquid, a supernatant was removed. The supporting catalyst was washed 3 times using toluene, and drying was performed in vacuum at 60°C for 10 hours to obtain 3.8 g of a hybrid supported catalyst in a free flow powder form.

<u>Preparation Example 2</u>

3.8 g of a hybrid supported catalyst in a free flow powder form was obtained in the same manner as in Preparation Example 1, except that 38 mg of the transition metal compound of Chemical Formula 2-1, 46 mg of the transition metal compound of Chemical Formula 2-2, and 22 mg of the transition metal compound of Chemical Formula 5-1 were used.

<u>Preparation Example 3</u>

3.8 g of a hybrid supported catalyst in a free flow powder form was obtained in the same manner as in Preparation Example 1, except that 12 mg of the transition metal compound of Chemical Formula 2-1, 58 mg of the transition metal compound of Chemical Formula 2-1, and 28 mg of the transition metal compound of Chemical Formula 1-4 were used.

<u>Preparation Example 4</u>

3.8 g of a hybrid supported catalyst in a free flow powder form was obtained in the same manner as in Preparation Example 1, except that 13 mg of the transition metal compound of Chemical Formula 2-1, 80 mg of the transition metal compound of Chemical Formula 2-2, and 18 mg of the transition metal compound of Chemical Formula 1-1 were used.

Preparation Example 5

3.8 g of a hybrid supported catalyst in a free flow powder form was obtained in the same manner as in Preparation Example 1, except that 26 mg of the transition metal compound of Chemical Formula 2-1, 114 mg of the transition metal compound of Chemical Formula 3-1, and 58 mg of the transition metal compound of Chemical Formula 1-4 were used.

Preparation Example 6

3.8 g of a hybrid supported catalyst in a free flow powder form was obtained in the same manner as in Preparation Example 1, except that 12 mg of the transition metal compound of Chemical Formula 2-1, 54 mg of the transition metal compound of Chemical Formula 3-1, and 28 mg of the transition metal compound of Chemical Formula 1-1 were used.

Preparation Example 7

3.8 g of a hybrid supported catalyst in a free flow powder form was obtained in the same manner as in Preparation Example 1, except that 22 mg of the transition metal compound of Chemical Formula 2-1, 44 mg of the transition metal compound of Chemical Formula 2-3, and 28 mg of the transition metal compound of Chemical Formula 1-1 were used.

Preparation Example 8

0.8 g of the transition metal compound of Chemical Formula 2-1, 3.8 g of the transition metal compound of Chemical Formula 2-2, and 1.9 g of the transition metal compound of Chemical Formula 5-1 were mixed with 1.1 kg of a toluene solution of 10 wt% of methylaluminoxane (MAO) in a glove box and stirred at room temperature for 1 hour. Meanwhile, 250 g of silica (XP2402) was added to a reactor, and 30 ml of purified toluene was added and mixed. A solution of the transition metal compound was injected into the obtained silica slurry and stirring was performed for 3 hours in an oil bath at 75°C. After completion of supporting and sufficient complete separation of solid/liquid, a supernatant was removed. The supporting catalyst was washed 3 times using toluene, and drying was performed in vacuum at 60°C for 10 hours to obtain 230 g of a hybrid supported catalyst in a free flow powder form.

Preparation Example 9

230 g of a hybrid supported catalyst in a free flow powder form was obtained in the same manner as in Preparation Example 8, except that 0.8 g of the transition metal compound of Chemical Formula 2-1, 5 g of the transition metal compound of Chemical Formula 2-2, and 1.2 g of the transition metal compound of Chemical Formula 1-1 were used.

Preparation Example 10

225 g of a hybrid supported catalyst in a free flow powder form was obtained in the same manner as in Preparation Example 8, except that 0.8 g of the transition metal compound of Chemical Formula 2-1, 3.8 g of the transition metal compound of Chemical Formula 2-2, and 1.8 g of the transition metal compound of Chemical Formula 1-4 were used.

Examples 1 to 2 and Comparative Examples 1 to 5

Ethylene and 1-hexene were copolymerized in the presence of 0.6 ml of 1 M triisobutylaluminum (TIBAL) as a scavenger in a fluidized bed gas phase reactor, using 10 to 100 mg of each the supported catalysts obtained in Preparation Examples 1 to 7. The temperature in the reactor was maintained at 80°C, the pressure of ethylene was 14 $kgf/cm^2$, the amount of 1-hexene was 100 ml, and the amount of hydrogen added was a total of 1,300 ml. The polymerization conditions are shown in the following Table 1.

[Table 1]

| Classification | Example 1 | Example 2 | Comparative Example 1 | Comparative Example 2 | Comparative Example 3 | Comparative Example 4 | Comparative Example 5 |
|---|---|---|---|---|---|---|---|
| Catalyst | Preparation Example 1 | Preparation Example 2 | Preparation Example 3 | Preparation Example 4 | Preparation Example 5 | Preparation Example 6 | Preparation Example 7 |
| Catalytic activity (gPE/g-Cat.•hr) | 2,400 | 2,800 | 1,640 | 1,700 | 3,750 | 4,950 | 4,100 |
| Hydrogen/ethylene concentration ratio (%) | 1.35 | 1.16 | 1.98 | 1.9 | 2.17 | 1.64 | 1.98 |
| 1-Hexene/ethylene concentration ratio (%) | 1.77 | 1.52 | 2.59 | 2.5 | 2.84 | 2.15 | 2.59 |

Example 3 and Comparative Examples 6 and 7

Ethylene and 1-hexene were copolymerized in a pilot-scale continuous fluidized bed gas phase reactor, using each of the supported catalysts obtained in Preparation Examples 8 to 10. The polymerization conditions are shown in the following Table 2.

[Table 2]

| Classification | Example 3 | Comparative Example 6 | Comparative Example 7 |
|---|---|---|---|
| Catalyst | Preparation Example 8 | Preparation Example 9 | Preparation Example 10 |
| Polymerization temperature (°C) | 90 | 90 | 90 |
| Catalyst injection amount (g/h) | 2.0 | 1.36 | 3.7 |
| Hydrogen injection amount (g/h) | 25.32 | 24.80 | 33.13 |
| 1-Hexene injection amount (kg/h) | 390 | 480 | 350 |
| Hydrogen/ethylene concentration ratio (%) | 0.97 | 1.12 | 1.42 |
| 1-Hexene/ethylene concentration ratio (%) | 0.63 | 0.70 | 0.60 |
| Production amount per hour (kg/h) | 9.25 | 5.67 | 8.09 |

Test Example

The physical properties of the olefin-based polymers obtained in the examples and the comparative examples were measured as follows. The measurement results are shown in the following Tables 3 and 4. For comparison, 8380 which is a high-speed processability product available from Hanwha Solutions was used as Control Example 1.

(1) Melt index and melt flow ratio (MFR)

Each melt index was measured with a load of 21.6 kg and a load of 2.16 kg at 190°C in accordance with ASTM D 1238, and the ratio ($MI_{21.6}/MI_{2.16}$) was calculated.

(2) Density

Density was measured according to ASTM D 1505.

(3) Gel transmission chromatography

Gel permeation chromatography-FTIR (GPC-FTIR) of model name GPC-6 available from Polymer Char was used. The measurement was performed at a temperature of 160°C, and trichlorobenzene was used as a solvent.

(4) Processability

Processability was measured using a Gottfert RG25 capillary rheometer. Measurement conditions were a round hole, a length of 20 mm, an effective length of 20 mm, diameter/width of 2, a height of 0 mm, a run angle of 180°C, and at 230°C, a piston diameter of 15 mm and a capillary diameter of 2 mm. Measurement was performed based on a shear rate at which shark skin or melt fracture occurred, and the shear rate was calculated from the above Equation 1.

(5) Gel index

A film having a thickness of 55 μm was prepared under the condition of 190°C with a blown film molding machine available from Colliun, and the number of gels having a size of 0.05 mm or more present in a film area of 5 cm×5 cm was counted.

- 0: a total of 10 or less
- 1: a total of more than 10 and 30 or less

- 2: a total of more than 30 and 50 or less
- 3: a total of more than 50 and 100 or less
- 4: a total of more than 100 and 200 or less
- 5: a total of more than 200 (film molding was difficult)

(6) Van Gurp-Palmen graph

The Van Gurp-Palmen graph was obtained by a dynamic frequency sweep, using an advanced rheometric expansion system (ARES). Measurement was performed using a 25 mm parallel plate in a disc shape at 190°C. In the Van Gurp-Palmen graph, the x-axis shows a complex modulus (G, dyne/$cm^2$), and the y-axis shows a phase angle (d(delta)).

[Table 3]

| Classification | Example 1 | Example 2 | Comparative Example 1 | Comparative Example 2 | Comparative Example 3 | Comparative Example 4 | Comparative Example 5 |
|---|---|---|---|---|---|---|---|
| $I_{2.16}$ (g/10 min) | 0.72 | 1.53 | 1.06 | 1.42 | 0.69 | 1.02 | 2.62 |
| $I_{21.6}$ (g/10 min) | 41 | 68 | 79.73 | 124.4 | 53.3 | 73.4 | 134.6 |
| MFR | 57 | 44 | 75 | 88 | 77 | 72 | 51 |
| Mn | 8,000 | 8,800 | 6,600 | 4,100 | 5,000 | 13,307 | 8,460 |
| Mw | 111,100 | 108, 500 | 107, 900 | 102, 600 | 84,200 | 104, 097 | 71,255 |
| MWD (Mw/Mn) | 13.8 | 12.4 | 16.5 | 25.09 | 16.9 | 7.8 | 8.4 |
| Density (g/cc) | 0.94 | 0.94 | 0.952 | 0.954 | 0.945 | 0.948 | 0.948 |
| Gel index | 1 | 1 | 2 | 4 | 5 | 5 | 5 |

[Table 4]

| Classification | Example 3 | Comparative Example 6 | Comparative Example 7 | Control Example 1 |
|---|---|---|---|---|
| $I_{2.16}$ (g/10 min) | 0.7 | 0.62 | 0.84 | 0.74 |
| $I_{21.6}$ (g/10 min) | 47.75 | 56.64 | 44.80 | 48.50 |
| MFR | 68 | 91 | 53 | 65 |
| Mn | 2,700 | 2,400 | 4,900 | 20,138 |
| Mw | 139,100 | 147,500 | 133, 000 | 161,181 |
| MWD (Mw/Mn) | 50.9 | 61 | 26.9 | 8.0 |
| Density (g/cc) | 0.946 | 0.949 | 0.947 | 0.945 |
| Gel index | 1 | >5 | 2 | 1 |
| Processability (1/sec) | 2,250 | ND | 3,000 | 1,000 |

As confirmed from Tables 1 and 2 above, the films prepared from the olefin-based polymer of Examples 1 and 2 within the scope of the present invention had suppressed gel production. However, the films prepared from the olefin-based polymers of Comparative Examples 1 to 5 had the increased number of gels.

Meanwhile, as confirmed from Tables 3 and 4 above, the olefin-based polymer of Example 3 within the scope of the present invention had suppressed gel production and a very high shear rate showing high-speed processability. The olefin-based polymer of Example 3 had a similar gel degree to the commercial product (Control Example 1) and much better high-speed processability. However, Comparative Example 6 had the greatly increased number of gels and its shear rate was not able to be measured. Comparative Example 7 had an excellent shear rate, but had the increased number of gels as compared with Example 3.

In addition, as confirmed from FIG. 1, the olefin-based polymer of Example 3 showed an inflection point in the Van Gurp-Palmen graph, unlike Comparative Examples 6 and 7 and Control Example 1. This shows that the olefin-based

polymer of Example 3 had a long chain branch, but gel production by entanglement of long chain branches was suppressed.

## Claims

1. A method for preparing an olefin-based polymer, the method comprising: polymerizing ethylene and at least one α-olefin in the presence of a hybrid metallocene catalyst comprising: (a) at least one first transition metal compound selected from transition metal compounds represented by the following Chemical Formulae 1 to 4; (b) at least one second transition metal compound selected from a transition metal compound represented by the following Chemical Formula 5; and (c) a cocatalyst compound to obtain an olefin-based polymer, wherein the olefin-based polymer has a density of 0.930 to 0.970 g/cm$^3$, a melt index ($I_{2.16}$) of 0.1 to 2.0 g/10 min as measured at 190°C with a load of 2.16 kg, a weight average molecular weight of 100,000 to 150,000 g/mol, and a shear rate defined by the following Equation 1 of 1,500 sec$^{-1}$ or more, at which a melt fracture or shark skin phenomenon occurs when measured with a capillary rheometer:

[Equation 1]

$$\dot{\gamma}_{ap} = \frac{4V}{\pi R^3}$$

[Chemical Formula 1]

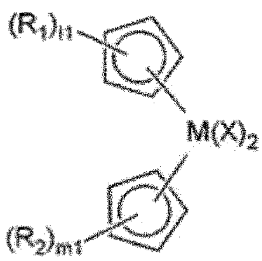

[Chemical Formula 2]

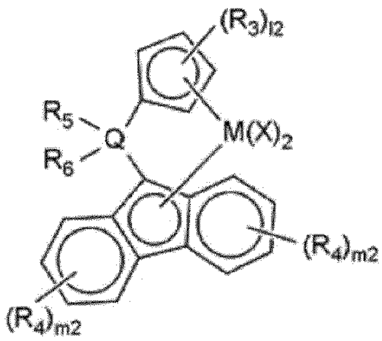

[Chemical Formula 3]

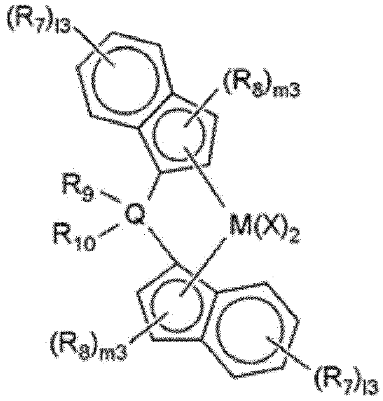

[Chemical Formula 4]

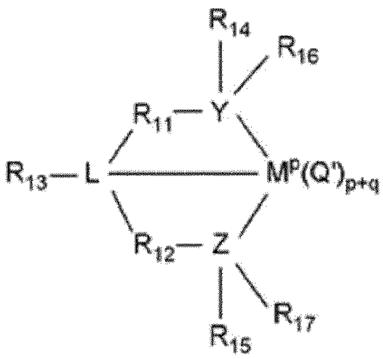

[Chemical Formula 5]

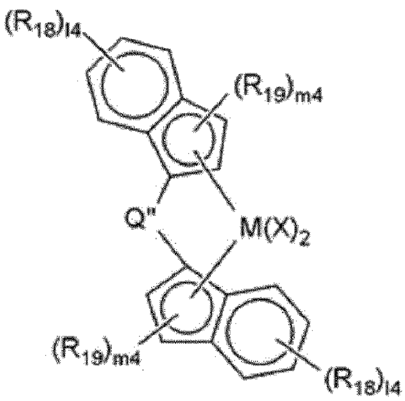

wherein $\dot{r}_{ap}$ is an apparent shear rate ($sec^{-1}$), V is a volume flow ($mm^3/sec$) produced by a piston, and R is a radius (mm) of a round hole capillary,

l1 and m1 are independently of each other an integer of 0 to 5,

l2, l3, l4, and m2 are independently of one another an integer of 0 to 4,

m3 and m4 are independently of each other an integer of 0 to 2,

p is an oxidation state of M, and is +3, +4, or +5,

q is a formal charge of a YZL ligand, and is 0, -1, - 2, or -3,

M is independently of each other titanium (Ti), zirconium (Zr), or hafnium (Hf),

X is independently of each other halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,

Q is independently of each other carbon (C), silicon (Si), germanium (Ge), or tin (Sn),
Q' is an anionic leaving group and is independently of each other hydrogen, a substituted or unsubstituted $C_{1-40}$ hydrocarbon group, a substituted or unsubstituted $C_{1-40}$ heterohydrocarbon group, a hetero atom, or halogen,
Q" is a substituted or unsubstituted $C_{2-4}$ alkylene group,
L is nitrogen,
Y is nitrogen or phosphorus,
Z is nitrogen or phosphorus,
$R_1$ to $R_4$, $R_7$, $R_8$, $R_{18}$, and $R_{19}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring,
$R_5$, $R_6$, $R_9$, and $R_{10}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$ and $R_9$ and $R_{10}$ may or may not be independently of each other connected to each other to form a substituted or unsubstituted, saturated or unsaturated $C_{2-20}$ ring,
$R_{11}$ and $R_{12}$ are independently of each other a $C_{1-20}$ hydrocarbon group or a heteroatom-containing group, in which the heteroatom is silicon, germanium, tin, lead, or phosphorus, or $R_{11}$ and $R_{12}$ may be connected to each other,
$R_{13}$ does not exist, or is hydrogen, $C_{1-20}$ alkyl, a halogen, or a heteroatom-containing group,
$R_{14}$ and $R_{15}$ are independently of each other an alkyl group, an aryl group, a substituted aryl group, a cyclic alkyl group, a substituted cyclic alkyl group, or a polycyclic system, and
$R_{16}$ and $R_{17}$ independently of each other, do not exist or may be hydrogen, an alkyl group, a halogen, heteroatom, a hydrocarbyl group, or a heteroatom-containing group.

2. The method for preparing an olefin-based polymer of claim 1, wherein a mole ratio between the first transition metal compound and the second transition metal compound is in a range of 10:1 to 1:10.

3. The method for preparing an olefin-based polymer of claim 1, wherein the transition metal compound of Chemical Formula 1 is at least one of the transition metal compounds represented by the following Chemical Formulae 1-1 to 1-4, the transition metal compound of Chemical Formula 2 is at least one of the transition metal compounds represented by the following Chemical Formulae 2-1 to 2-3, the transition metal compound of Chemical Formula 3 is a transition metal compound represented by the following Chemical Formula 3-1, and the transition metal compound of Chemical Formula 4 is a transition metal compound represented by the following Chemical Formula 4-1:

[Chemical Formula 1-1]

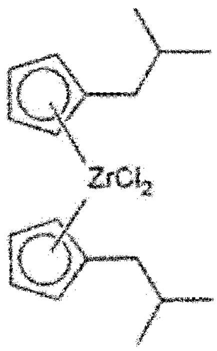

[Chemical Formula 1-2]

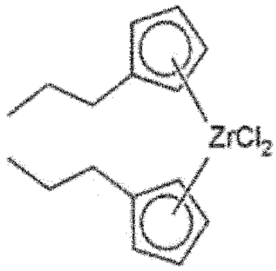

[Chemical Formula 1-3]

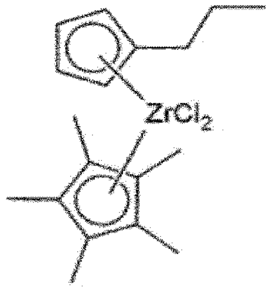

[Chemical Formula 1-4]

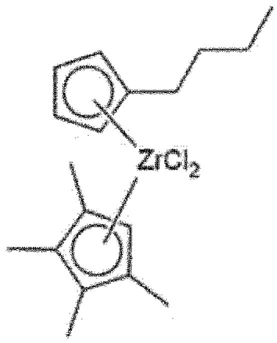

[Chemical Formula 2-1]

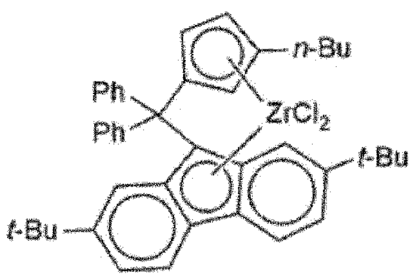

[Chemical Formula 2-2]

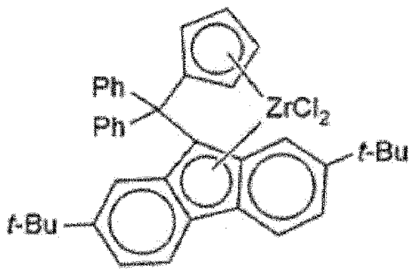

[Chemical Formula 2-3]

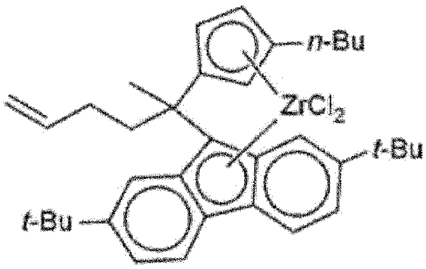

[Chemical Formula 3-1]

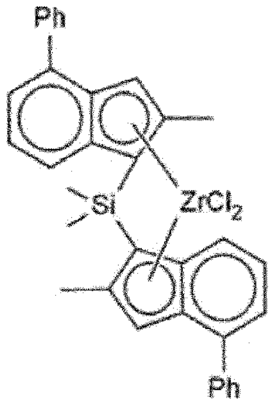

[Chemical Formula 4-1]

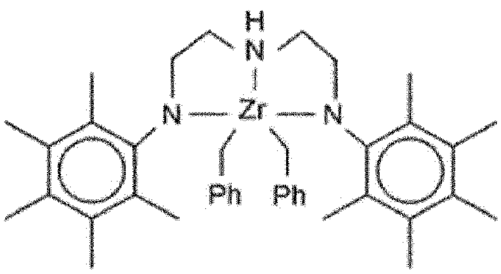

wherein n-Bu is n-butyl, t-Bu is t-butyl, and Ph is phenyl.

**4.** The method for preparing an olefin-based polymer of claim 1, wherein the transition metal compound of Chemical Formula 5 is a transition metal compound represented by the following Chemical Formula 5-1:

[Chemical Formula 5-1]

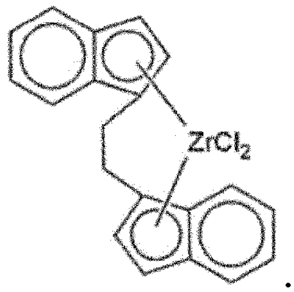

5. The method for preparing an olefin-based polymer of claim 1, wherein the cocatalyst compound comprises at least one selected from the group consisting of a compound represented by the following Chemical Formula 6, a compound represented by the following Chemical Formula 7, and a compound represented by Chemical Formula 8:

[Chemical Formula 6]

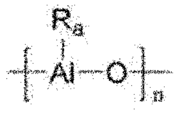

[Chemical Formula 7]

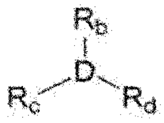

[Chemical Formula 8] $[L-H]^+[Z(A)_4]^-$ or $[L]^+[Z(A)_4]^-$

wherein n is an integer of 2 or more, and $R_a$ is a halogen atom, a hydrocarbon group having 1 to 20 carbon atoms, or a hydrocarbon group having 1 to 20 carbon atoms substituted by halogen,
D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by halogen, or an alkoxy group having 1 to 20 carbon atoms, and
L is a neutral or cationic Lewis base, $[L-H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms.

6. The method for preparing an olefin-based polymer of claim 5, wherein the compound represented by Chemical Formula 6 is at least one selected from the group consisting of methylaluminoxane, ethylaluminoxane, isobutylaluminoxane, and butylaluminoxane.

7. The method for preparing an olefin-based polymer of claim 5, wherein the compound represented by Chemical Formula 7 is at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, and tributylboron.

8. The method for preparing an olefin-based polymer of claim 5, wherein the compound represented by Chemical

Formula 8 is at least one selected from the group consisting of triethylammonium tetraphenylborate, tributylammonium tetraphenylborate, trimethylammonium tetraphenylborate, tripropylammonium tetraphenylborate, trimethylammonium tetra(*p*-tolyl)borate, trimethylammonium tetra(*o,p*-dimethylphenyl) borate, tributylammonium tetra(*p*-trifluoromethylphenyl)borate, trimethylammonium tetra(*p*-trifluoromethylphenyl)borate, tributylammonium tetrapentafluorophenylborate, N,N-diethylanilinium tetraphenylborate, N,N-diethylanilinium tetrapentafluorophenylborate, diethylammonium tetrapentafluorophenylborate, triphenylphosphonium tetraphenylborate, trimethylphosphonium tetraphenylborate, triethylammonium tetraphenylaluminate, tributylammonium tetraphenylaluminate, trimethylammonium tetraphenylaluminate, tripropylammonium tetraphenylaluminate, trimethylammonium tetra(*p*-tolyl) aluminate, tripropylammonium tetra(*p*-tolyl)aluminate, triethylammonium tetra(*o,p*-dimethylphenyl)aluminate, tributylammonium tetra(*p*-trifluoromethylphenyl)aluminate, trimethylammonium tetra(*p*-trifluoromethylphenyl)aluminate, tributylammonium tetrapentafluorophenylaluminate, N,N-diethylanilinium tetraphenylaluminate, N,N-diethylanilinium tetrapentafluorophenylaluminate, diethylammonium tetrapentatetraphenylaluminate, triphenylphosphonium tetraphenylaluminate, trimethylphosphonium tetraphenylaluminate, tripropylammonium tetra(*p*-tolyl)borate, triethylammonium tetra(*o,p*-dimethylphenyl) borate, triphenylcarbonium tetra(*p*-trifluoromethylphenyl)borate, and triphenylcarbonium tetrapentafluorophenylborate.

**9.** The method for preparing an olefin-based polymer of claim 1, the hybrid metallocene catalyst further comprises a carrier which supports the hybrid transition metal compound, the cocatalyst compound, or both of them.

**10.** The method for preparing an olefin-based polymer of claim 9, wherein the carrier comprises at least one selected from the group consisting of silica, alumina, and magnesia.

**11.** The method for preparing an olefin-based polymer of claim 9, wherein a total amount of the hybrid transition metal compound supported on the carrier is 0.001 to 1 mmol based on 1 g of the carrier, and a total amount of the cocatalyst compound supported on the carrier is 2 to 15 mmol based on 1 g of the carrier.

**12.** The method for preparing an olefin-based polymer of claim 1, wherein the $\alpha$-olefin is one or more selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene.

**13.** The method for preparing an olefin-based polymer of claim 12, wherein the $\alpha$-olefin is 1-hexene.

**14.** The method for preparing an olefin-based polymer of claim 1, wherein the polymerization of ethylene and at least one $\alpha$-olefin is performed by gas phase polymerization.

**15.** The method for preparing an olefin-based polymer of claim 14, wherein the polymerization of ethylene and at least one $\alpha$-olefin is performed in a gas phase fluidized bed reactor.

**16.** An olefin-based polymer, which is prepared by the method for preparing an olefin-based polymer of any one of claims 1 to 15, and has a density of 0.930 to 0.970 g/cm$^3$, a melt index ($I_{2.16}$) of 0.1 to 2.0 g/10 min as measured at 190°C with a load of 2.16 kg, a weight average molecular weight of 100,000 to 150,000 g/mol, and a shear rate defined by the following Equation 1 of 1,500 sec$^{-1}$ or more, at which a melt fracture or shark skin phenomenon occurs when measured with a capillary rheometer:

[Equation 1]

$$\dot{\gamma}_{ap} = \frac{4V}{\pi R^3}$$

wherein $\dot{r}_{ap}$, V, and R are as defined in claim 1.

**17.** The olefin-based polymer of claim 16, wherein the olefin-based polymer has a ratio (melt flow ratio; MFR) between a melt index ($I_{21.6}$) measured with a load of 21.6 kg and a melt index ($I_{2.16}$) measured with a load of 2.16 kg at 190°C of 30 to 200.

**18.** The olefin-based polymer of claim 16, wherein when the olefin-based polymer is shown as a Van Gurp-Palmen graph,

there is an inflection point.

**19.** The olefin-based polymer of claim 16, wherein when the olefin-based polymer is molded into a film having a thickness of 30 to 60 μm by blown film molding, the film has a gel index of 1 or less, the gel index being defined by the number of gels having a size of 0.05 mm or more present in a random film area of 5 cm×5 cm.

**20.** An olefin-based polymer prepared by molding the olefin-based polymer of claim 16, wherein when the olefin-based polymer is molded into a film having a thickness of 30 to 60 μm by blown film molding, the film has a gel index of 1 or less, the gel index being defined by the number of gels having a size of 0.05 mm or more present in a random film area of 5 cm×5 cm.

[FIG. 1]

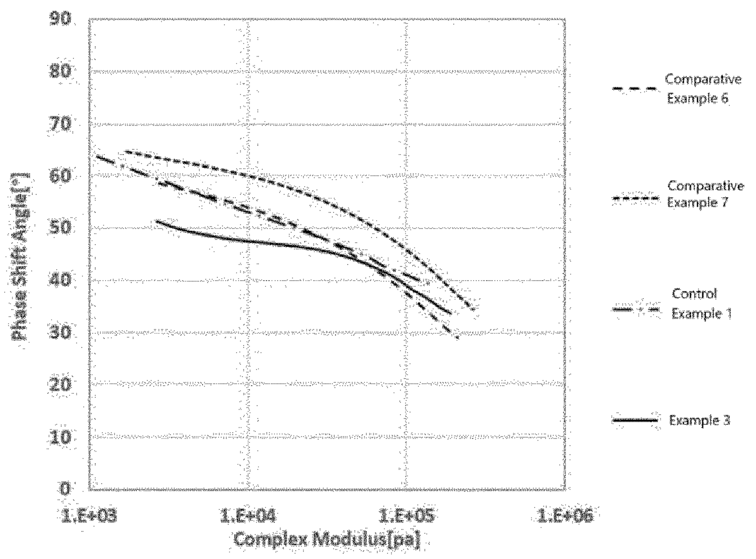
90
80
70
60
50
40
30
20
10
0
Phase Shift Angle[°]
1.E+03
1.E+04
1.E+05
1.E+06
Complex Modulus[pa]
Comparative Example 6
Comparative Example 7
Control Example 1
Example 3

[FIG. 2]

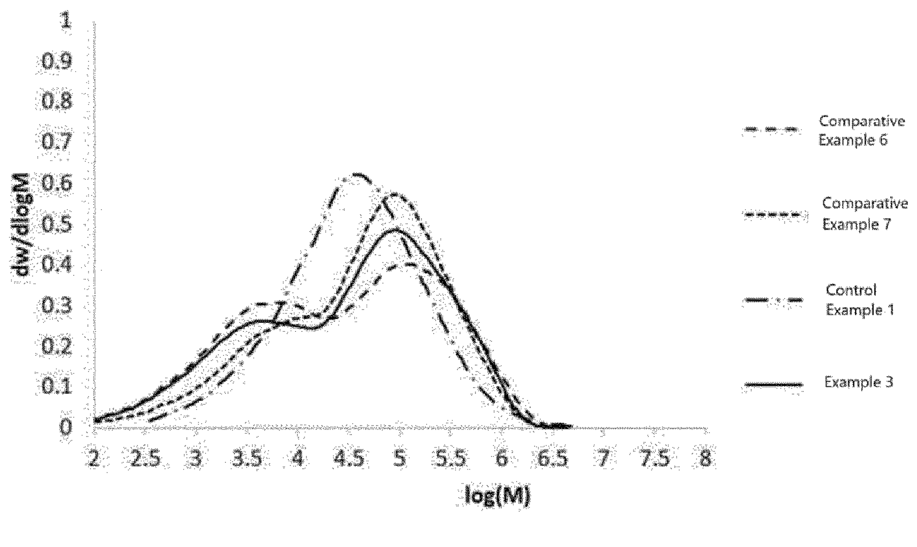
1
0.9
0.8
0.7
0.6
0.5
0.4
0.3
0.2
0.1
0
dw/dlogM
2
2.5
3
3.5
4
4.5
5
5.5
6
6.5
7
7.5
8
log(M)
Comparative Example 6
Comparative Example 7
Control Example 1
Example 3

**INTERNATIONAL SEARCH REPORT**

International application No.
**PCT/KR2023/020135**

**A. CLASSIFICATION OF SUBJECT MATTER**

**C08F 210/16**(2006.01)i; **C08F 210/14**(2006.01)i; **C08F 4/659**(2006.01)i; **C08F 4/6592**(2006.01)i; **C08F 4/60**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 10/02(2006.01); C08F 10/06(2006.01); C08F 4/642(2006.01); C08F 4/659(2006.01); C08F 4/6592(2006.01); C08L 23/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 전이금속 화합물(transition metal compound), 혼성(hybrid), 조촉매(co-catalyst), 밀도(density), 용융지수(melt index), 전단점도(shear viscosity)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0049272 A (DAELIM INDUSTRIAL CO., LTD.) 10 May 2017 (2017-05-10)<br>See claims 1-22; and paragraphs [0011], [0020], [0023], [0037]-[0039], [0044]-[0072], [0100]-[0116] and [0119]. | 1-20 |
| X | KR 10-2018-0043898 A (DAELIM INDUSTRIAL CO., LTD.) 02 May 2018 (2018-05-02)<br>See claims 1-11; and paragraphs [0112]-[0118], [0133]-[0135] and [0186]-[0193]. | 1-20 |
| X | KR 10-2017-0106192 A (LG CHEM, LTD.) 20 September 2017 (2017-09-20)<br>See claims 1-8; and paragraphs [0125], [0126], [0128], [0167], [0188], [0190], [0192], [0194] and [0196]-[0199]. | 1-13,16-20 |
| A | KR 10-2021-0048330 A (LG CHEM, LTD.) 03 May 2021 (2021-05-03)<br>See claims 1-11. | 1-20 |
| A | WO 2005-068519 A2 (CHEVRON PHILLIPS CHEMICAL COMPANY, LP et al.) 28 July 2005 (2005-07-28)<br>See claims 1-60. | 1-20 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 March 2024** | **18 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/020135**

| Patent document cited in search report | Publication date (day/month/year) | Patent family member(s) | Publication date (day/month/year) |
|---|---|---|---|
| KR 10-2017-0049272 A | 10 May 2017 | CN 108350113 A | 31 July 2018 |
| | | CN 108350113 B | 25 May 2021 |
| | | EP 3369752 A1 | 05 September 2018 |
| | | KR 10-1904496 B1 | 28 November 2018 |
| | | US 10604604 B2 | 31 March 2020 |
| | | US 2018-0305481 A1 | 25 October 2018 |
| | | WO 2017-074077 A1 | 04 May 2017 |
| KR 10-2018-0043898 A | 02 May 2018 | CN 108235715 A | 29 June 2018 |
| | | CN 108235715 B | 09 October 2020 |
| | | KR 10-1777062 B1 | 08 September 2017 |
| | | KR 10-2060669 B1 | 31 December 2019 |
| | | US 10612507 B2 | 07 April 2020 |
| | | US 2018-0230954 A1 | 16 August 2018 |
| | | WO 2018-074888 A1 | 26 April 2018 |
| | | WO 2018-074897 A1 | 26 April 2018 |
| KR 10-2017-0106192 A | 20 September 2017 | JP 2018-522993 A | 16 August 2018 |
| | | JP 6681462 B2 | 15 April 2020 |
| | | KR 10-2064990 B1 | 02 March 2020 |
| | | US 10774160 B2 | 15 September 2020 |
| | | US 2019-0010256 A1 | 10 January 2019 |
| | | WO 2017-155211 A1 | 14 September 2017 |
| KR 10-2021-0048330 A | 03 May 2021 | None | |
| WO 2005-068519 A2 | 28 July 2005 | AT 521643 T | 15 September 2011 |
| | | AU 2005-205527 A1 | 28 July 2005 |
| | | AU 2005-205527 B2 | 25 November 2010 |
| | | AU 2010-241413 A1 | 09 December 2010 |
| | | AU 2010-241413 B2 | 28 June 2012 |
| | | BR PI0506769 A | 22 May 2007 |
| | | BR PI0506769 B1 | 01 September 2015 |
| | | CA 2552748 A1 | 28 July 2005 |
| | | CA 2552748 C | 25 February 2014 |
| | | CA 2805929 A1 | 28 July 2005 |
| | | CA 2805929 C | 15 April 2014 |
| | | CN 101519468 A | 02 September 2009 |
| | | CN 101519468 B | 30 May 2012 |
| | | CN 1922220 A | 28 February 2007 |
| | | CN 1922220 B | 09 June 2010 |
| | | CN 1922220 C | 28 February 2007 |
| | | EG 25354 A | 18 December 2011 |
| | | EG 26509 A | 05 January 2014 |
| | | EP 1711543 A2 | 18 October 2006 |
| | | EP 1711543 B1 | 24 August 2011 |
| | | EP 2380919 A2 | 26 October 2011 |
| | | EP 2380919 A3 | 15 February 2012 |
| | | EP 2380919 B1 | 30 March 2016 |
| | | ES 2395403 T3 | 12 February 2013 |
| | | ES 2576843 T3 | 11 July 2016 |
| | | HK 1097411 A1 | 22 June 2007 |
| | | HK 1135712 A1 | 11 June 2010 |
| | | IN 2629DEN2012 A | 04 September 2015 |

Form PCT/ISA/210 (patent family annex) (July 2022)

**INTERNATIONAL SEARCH REPORT**
**Information on patent family members**

International application No.
**PCT/KR2023/020135**

| Patent document cited in search report | Publication date (day/month/year) | Patent family member(s) | Publication date (day/month/year) |
|---|---|---|---|
| | | JP 2007-520597 A | 26 July 2007 |
| | | JP 2011-117006 A | 16 June 2011 |
| | | JP 5279188 B2 | 04 September 2013 |
| | | RU 2006128876 A | 20 February 2008 |
| | | RU 2374272 C2 | 27 November 2009 |
| | | SG 134332 A1 | 29 August 2007 |
| | | US 2004-0067844 A1 | 08 April 2004 |
| | | US 2005-0153830 A1 | 14 July 2005 |
| | | US 2005-0203261 A1 | 15 September 2005 |
| | | US 2006-0025546 A1 | 02 February 2006 |
| | | US 2008-0281063 A9 | 13 November 2008 |
| | | US 2009-0054606 A1 | 26 February 2009 |
| | | US 2010-0048843 A1 | 25 February 2010 |
| | | US 2011-0319575 A1 | 29 December 2011 |
| | | US 6667274 B1 | 23 December 2003 |
| | | US 7041617 B2 | 09 May 2006 |
| | | US 7109277 B2 | 19 September 2006 |
| | | US 7456243 B2 | 25 November 2008 |
| | | US 7842763 B2 | 30 November 2010 |
| | | US 8030241 B2 | 04 October 2011 |
| | | US 8426538 B2 | 23 April 2013 |
| | | WO 2005-068519 A3 | 01 December 2005 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5272236 A